## Europäisches Patentamt
## European Patent Office
## Office européen des brevets

(19)

(11) Veröffentlichungsnummer: **0 008 436**
**B1**

(12) **EUROPÄISCHE PATENTSCHRIFT**

(45) Veröffentlichungstag der Patentschrift: **30.06.82**

(51) Int. Cl.³: **B 41 J 1/20**, B 41 J 9/18, B 41 J 9/30

(21) Anmeldenummer: **79102974.7**

(22) Anmeldetag: **16.08.79**

(54) Schnelldrucker.

(30) Priorität: **19.08.78 DE 2836396**

(43) Veröffentlichungstag der Anmeldung:
**05.03.80 Patentblatt 80/5**

(45) Bekanntmachung des Hinweises auf die Patenterteilung:
**30.06.82 Patentblatt 82/26**

(84) Benannte Vertragsstaaten:
**AT BE CH FR GB IT LU NL SE**

(56) Entgegenhaltungen:
**FR - A - 2 183 281**
**FR - A - 2 278 494**
**US - A - 3 805 698**

(73) Patentinhaber: **Brück, Gernot Klaus**
**Hermann-Pflaume-Strasse 6**
**D-5000 Köln 41 (DE)**

(72) Erfinder: **Brück, Gernot Klaus**
**Hermann-Pflaume-Strasse 6**
**D-5000 Köln 41 (DE)**

(74) Vertreter: **Patentanwälte Dr. Solf & Zapf**
**Postfach 13 02 19**
**D-5600 Wuppertal 1 (DE)**

Courier Press, Leamington Spa, England.

Schnelldrucker

Die vorliegende Erfindung bezieht sich auf einen Schnelldrucker, insbesondere Zeilendrucker, bestehend aus einem Typenträger, einem Farbband, Hammerfedern und einem Auslösemechanismus für dieselben aus einer rotierenden Spannwelle und einem elektronischen Steuerteil.

Ein derartiger Schnelldrucker ist aus der FR—A—2 183 281 bekannt. Die Betätigung der Hammerfedern, die zum Anschalg der jeweiligen Schreibtype dienen, erfolgt einzeln über jeder Feder zugeordnete Magnete. Diese Steuerung der Hammerfedern ist aber konstruktiv kompliziert und deshalb bereits vom mechanischen Aufbau her anfällig, und darüber hinaus ist eine aufwendige elektronische Steuerung sowie ein ebenfalls entsprechend aufwendiges Steuerprogramm erforderlich. Der Vorteil eines derartigen Schnelldruckers, insbesondere Zeilendruckers, liegt in seiner relativ hohen Druckgeschwindigkeit.

Der vorliegenden Erfindung liegt nun die Aufgabe zugrunde, einen Schnelldrucker, insbesondere Zeilendrucker, zu schaffen, dessen Herstellung einfacher und äußerst kostengünstig ist, indem insbesondere die Steuerung der Hammerfedern mechanisch einfacher und robuster erfolgen soll, der aber trotzdem eine ausreichend hohe Druckgeschwindigkeit besitzt.

Erfindungsgemäß wird dies dadurch erreicht, daß die Spannwelle in Anschlargrichtung hinter den Hammerfedern angeordnet ist und einen auf ihrer Umfangsfläche schraubenlinienförmig verlaufenden Steg aufweist, und am Wellenanfang und am Wellenende jeweils ein Maximum der Schraubeinlinie liegt, sowie aus einem in Schreibzeilenrichtung verlaufenden und verschiebbaren Auslöse- und Halteband für die Hammerfedern, das von diesen im gespannten Zustand mit ihren Hammerspitzen hintergriffen wird, und eine Ausnehmung für den Durchtritt der Hammerfedern aufweist. Damit wird erfindungsgemäß der bei den bekannten Schnelldruckern aus vielen Einzelteilen bestehende Auslösemechanismus im vorliegenden Fall im wesentlichen durch zwei Teile ersetzt, nämlich die Spannwelle und das Auslöse- und Halteband. Dabei handelt es sich um mechanisch robuste und preiswert herzustellende Teile, die jedes für sich auch nur einem geringen Verschleiß unterliegen. Darüber hinaus erfordert die Steuerung dieser beiden Teile auch nur ein relativ einfaches Steuerungsprogramm, das mit geringen elektronischen Mitteln durchführbar ist. Erfindungsgemäß ist es weiterhin von Vorteil, wenn die Ausnehmung eine Länge hat, die mindestens einer halben Periode der Schraubenlinie entspricht. Durch die im Auslöse- und Halteband vorhandene Ausnehmung, die von einer Anfangsstellung aus in Schreibzeilenrichtung ständig weiterrückt, erfolgt die Auslösung der einzelnen Hammerfedern, und durch die erfindungsgemäße, Dimensionierung dieser Ausnehmung wird gewährleistet, daß nach einem Durchlauf des Auslöse- und Haltebandes alle Hammerfedern wieder im gespannten Zustand hinter dem Halteband liegen. Die Auslösung der Hammerfedern aus der Spannstellung mittels der im Halteband befindlichen Ausnehmung stellt wiederum eine mechanisch einfache und unkomplizierte Lösung dar, die keine weiteren zusätzlichen konstruktiven Maßnahmen erforderlich macht, so daß das Spannen und Auslösen der Hammerfedern allein durch das Zusammenwirken der Spannwelle und des Auslöse- und Haltebandes erfolgt.

Dabei ist erfindungsgemäß weiterhin vorgesehen, daß die Spannwelle derart angeordnet ist, daß im gespannten Zustand die Federschenkel im Bereich des Maximums des schraubenlinienförmigen Steges anliegen und in der entspannten Stellung am Wellengrund. Dabei wird unter Wellengrund der Bereich der Wellenoberfläche bezeichnet, in dem sich kein schraubenlinienförmiger Gang befindet. Durch diese Anordnung wirkt die Spannwelle nicht nur als Anschalgbegrenzer für die Hammerfedern, die jedoch mit ihrem oberhalb der Welle befindlichen Schenkel über die Vertikalstellung hinaus weiterfedern, bis sie auf die Schreibtype des Typenbandes treffen, die hinter der Anschlagstelle angeordnet ist, Hierdurch wird der Federweg auch derart begrenzt, daß für den Fall, daß keine Schreibtype hinter der Anschlagstelle vorhanden ist, sondern eine Leerstelle des Typenbandes, keine Anschalgwirkung zustande kommt und somit eine Leerstelle auf dem zu bedruckenden Papier erzeugt wird. Die Federkennung der Hammerfedern ist dabei derart ausgewählt, daß eine hinreichend große Verweilzeit der Hammerkörper in Anschalgstellung erreicht wird, um einen sauberen Druck zu erzielen.

In weiterer Ausgestaltung der Erfindung entspricht die Anzahl der in Reihe nebeneinanderstehenden Hammerfedern der Anzahl der Schreibstellen pro Zeile. Dabei sind die Hammerfedern nebeneinander in einer Klemmleiste zweckmäßigerweise befestigt, wodurch sich ein leichter Ein- und Ausbau derselben ergibt, sobald festgestellt wird, daß diese in ihrer Federeigenschaft nachlassen. Wieterhin kann es zweckmäßig sein, den Hammerkörper der Hammerfedern an seiner Spitze kugelförmig auszubilden. Hierdurch wird eine punktuelle Auflage des Hammerkörpers am Halteband erreicht, wodurch ein geringer Reibungswiderstand zwischen diesen beiden Teilen vorhanden ist.

Weitere vorteilhafte Ausführungsformen der Erfindung sind in den Unteransprüchen 6—9 enthalten.

Anhand des in den beiliegende Zeichnungen dargestellten Ausführungsbeispiels wird die Erfindung näher erläutert.

Es zeigen:

Fig. 1 eine Prinzipansicht des Aufbaus eines erfindungsgemäßen Schnelldruckers,

Fig. 2 ein Detail des erindungsgemäßen Schnelldruckers,

Fig. 3 ein weiteres Detail des erfindungsgemäßen Schnelldruckers,

Fig. 4 eine weitere Ansicht des Aufbaus des erfindungsgemäßen Schnelldruckers.

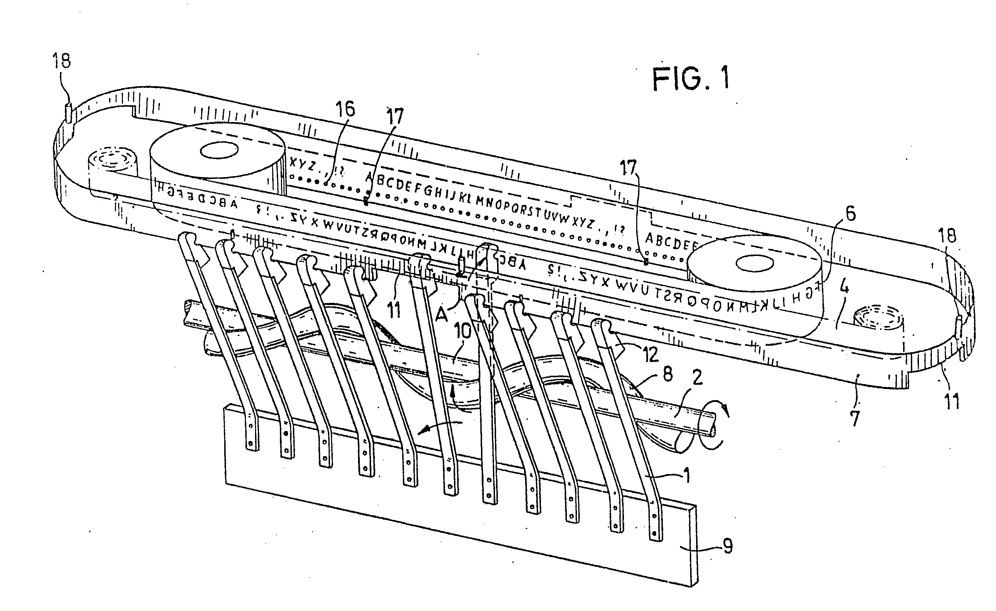

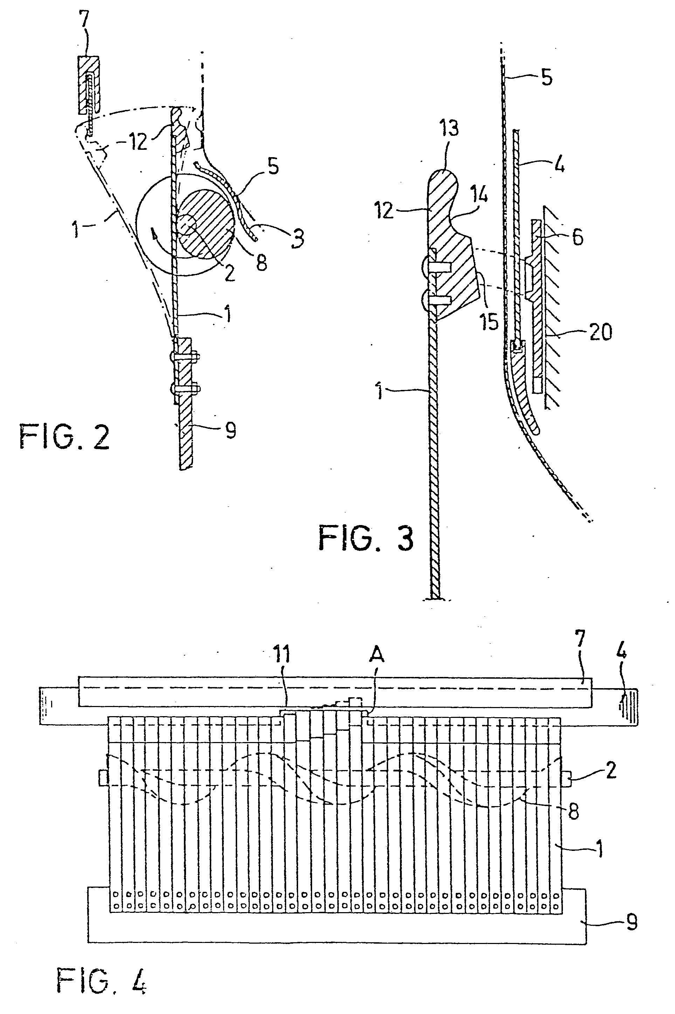

Wie sich aus Fig. 1 bis 3 ergibt, besteht ein erfindungsgemäßer Schnelldrucker, der insbesondere als Zeilendrucker geeignet ist, im wesentlichen aus den folgenden in Anschlagrichtung hintereinander angeordneten Teilen: Hammerfedern 1, einer Spannwelle 2, einer Papierführung 3 mit eingespanntem Papier 5, einem Farbband 4 und einem Typenband 6. Weiterhin ist oberhalb der Hammerfedern 1 ein Halte- und Auslöseband 7 angeordnet. Die Spannwelle 2 weist einen schraubenlinienförmig verlaufenden Steg 8 auf, der dazu dient, wie in Fig. 2 gezeigt, die Hammerfedern 1 zu spannen, d.h. von der entspannten Stellung in die gespannte Stellung zu bewegen, was im Laufe einer Wellenumdrehung erfolgt. Wie sich aus Fig. 1 ergibt, sind quer zur Transportrichtung des Papiers, d.h. in Zeilenrichtung, soviel Hammerfedern 1 nebeneinander angeordnet wie Schreibstellen pro Zeile vorhanden sein sollen. Die Spannwelle besitzt eine Länge, die der Schreibzeilenseite mindestens entspricht, wobei der schraubenlinienförmig um die Spannwelle 2 verlaufende Gang 8 derart ausgebildet ist, daß am Wellenanfang und -ende jeweils ein Schraubenlinienmaximum liegt. Aufgrund dieser Wellenausführung werden alle Hammerfedern 1 bei einer vollständigen Wellenumdrehung einmal gespannt. Die Spannwelle 2 ist in einem derartigen Abstand parallel zu den Hammerfedern 1 oberhalb einer Einspannleiste 9 derselben gelagert, daß die Hammerfedern 1 im entspannten Zustand, d.h. in ihrer vertikalen Lage, an der gangfreien Wellenoberfläche, d.h. dem Wellengrund 10, anliegen. Somit dient die Welle 2 nicht nur zum Spannen der Hammerfedern 1 sondern auch zur Anschlagbegrenzung derselben. Die Federkennung der Hammerfedern egibt sich aus der erforderlichen Verweilzeit derselben in der Anschlagstellung für einen sauberen Druck. Das Halteund Auslöseband 7 dient zunächst dazu, die Hammerfedern 1 im gespannten Zustand zu halten. Um dies zu ermöglichen, weist das Halteband 7 eine Ausnehmung 11 auf, durch die hindurch die Hammerfedern 1 sich beim Auslösen zum Anschlagen und beim Zurückbiegen zum Spannen bewegen können. Dabei entspricht die Breite der Ausnehmung 11 mindestens einer halben Schraubenlinienperiode. Dadurch wird erreicht, daß bei einer Bewegung des Haltebandes von der Anfangsstellung z.B. am linken Rand der Schreibzeile und einer Endstellung am rechten Rand der Schreibzeile bei einer Schreibrichtung von links nach rechts alle Hammerfedern 1 einmal ausgelöst und wieder gespannt worden sind. Die Bewegung des Halte- und Auslösebandes 7 ist mit der Drehung der Spannwelle 2 derart synchronisiert, daß ein Weg X des Bandes der Verlagerung eines zugeordneten Punktes der Spannwelle 2 um denselben Betrag X in Zeilenschreibrichtung entspricht.

Wie sich aus Fig. 3 ergibt, ist der Hammerkörper 12 mit einer kugelförmigen Spitze 13 versehen. Dies hat den Vorteil, daß in der Haltestellung, in der die Hammerfeder 1 mit der Spitze 13 das Band 7 hintergreift, nur eine punktuelle Auflage vorhanden ist und beim Auslösen somit nur ein geringer Reibungswiderstand vorliegt. An die Spitze 13 schließt sich eine Einbuchtung 14 an, in die der Rand des Haltebandes 7 hineinragt. nach unten an die Einbuchtung 14 folgt eine Anschlagfläche 15, die leicht gegen die Anschlagrichtung abgeschrägt verläuft, so daß sichergestellt ist, daß in der Anschalgstellung, siehe Fig. 2, in der die Hammerfeder 1 über die vertikale Stellung hinaus nach vorne gefedert ist, die Anschlagfläche senkrecht verläuft, um einen einwandfreien vollen Anschlag zu erzeugen.

Der Lauf des Halte- und Auslösebandes 7 ist weiterhin derart auf die Drehung der Welle abgestimmt, daß der Anfang der Ausnehmung 11, Stelle A, stets demjenigen Bereich der Spannwelle 2 zugeordnet ist, der zum Auslösezeitpunkt stegfrei ist.

Die Funktionsweise ist nun wie folgt: Zu Beginn des Druckens einer Zeile befindet sich der Anfang A des Halte- und Auslösebandes 7 in einer äußerst linken Stellung, wobei noch alle Hammerfedern 1 aufgrund einer vorhergehenden Umdrehung der Spannwelle 2 gespannt sind. Das Halte- und Auslöseband 7 bewegt sich nun Schreibstelle um Schreibstelle nach rechts, wobei pro Schreibstelle jeweils eine Hammerfeder 1 ausgelöst wird, indem die jeweilige Hammerfeder durch die Ausnehmung 11 freigegeben wird. Unmittelbar danach werden die ausgelösten Hammerfedern wieder durch die Drehung der Spannwelle 2 in die Spannstellung zurückgeführt, in der sie dann von dem Halte- und Auslöseband 7 bis zur nächsten Auslösung gehalten werden.

Nach dem Auslösen der Hammerfedern 1 schlagen diese gegen die der jeweiligen Schreibstelle zugeordnete Schreibtype des in Anschlagrichtung hinter dem Papier 5 und dem Farbband 4 angeordneten Typenbandes 6. Dabei kann die hinter dem Typeband 6 liegende Gehäusewand 20 gleichzeitig als Widerlager dienen. Die Zuordnung der einzelnen Schreibtypen erfolgt dadurch, daß die auf dem Typenband 6 befindlichen Schreibtypen eines Typensatzes, bestehend aus zum Beispiel allen üblichen Buchstaben, Zahlen und sonstigen Schreibzeichen, jeweils einer Zahl von 1 bis einer bestimmten Endzahl zugeordnet sind. Gleichzeitig ist jeder Schreibtype eine Zählmarke, z.B. eine Lochung 16, bei einer Lichtabtastung zugeordnet. Auf einem Typenband können mehrere Typensätze angeordnet sein, wodurch sich mit steigender Anzahl der Typensätze die Zugriffszeiten verkleinern und dadurch die Druckgeschwindigkeit erhöht. Zu Beginn jedes Typensatzes ist eine Anfangsmarke 17 vorgesehen, die z.B. eine Lichtschranke auslöst. Für die Zählung der Lochmarken 16 ist ebenfalls eine Lichtschranke beispielsweise vorgesehen. Wird nun der Anschlag eines bestimmten Schreibsymbols gewünscht, wird mittels eines integrierten Rechners der diesem Schreibsymbol zugeordnete Zahlenwert ausgewählt und dieser Zahlenwert am dauernd bzw. kontinuierlich umlaufenden Typenband mittels der Lochmarken und der Lichtschranke abgezählt.

Die Anfangsmarken 17 dienen bei diesem Abzählen dazu, dem Rechner jeweils den Anfang eines Typensatzes anzugeben, um das Zählwerk auf Null zu setzen. Die jeweilige Schreibstelle wird dadurch erfaßt, daß in der Zeilenanfangsstellung des Halte- und Auslösebandes 7 über eine Zeilenanfangsmarke 18 dem Rechner der Zeilenanfang mitgeteilt wird, was einer Nullstellung eines zugeordneten Zählwerkes entspricht. Danach werden vom Rechner die Schreibstellen fortlaufend mitgezählt und das Typenband jeweils entsprechend der Zählstellung angesteuert. Auf diese Weise erfolgt eine äußerst schnell Zuordnung des jeweiligen Typenzeichens zur gewünschten Schreibstelle. Der Antrieb der Welle, des Haltebandes, des Typenbandes und der Papiertransporteinrichtung kann mittels üblicher Schritt- und Bremsmotoren erfolgen. Die Abtastung der Typenmarken sowie der Anfangsmarken kann mittels Lichtschranke durchgeführt werden, wobei jedoch auch andere Signalgeber möglich sind. Die Hammerfedern stellen ebenfalls übliche Bauteile dar, die zudem bei einer Ermüdung derselben leicht ausgewechselt werden können. Sie bestehen aus einem hochwertigen Federstahl, wie auch das Halteund Auslöseband aus einem Stahlband hergestellt sein kann. Demnach ergibt sich eine im Ganzen einfache, robuste und wenig störanfällige Bauweise, die mit geringen elektronischen Steuermitteln auskommt, so daß sie äußerst kostengünstig herstellbar ist.

## Patentansprüche

1. Schnelldrucker, insbesondere Zeilendrucker, bestehend aus einem Typenträger (6), einem Farbband (4), Hammerfedern (1) und einem Auslösemechanismus für dieselben aus einer rotierenden Spannwelle (2) und einem elektronischen Steuerteil, dadurch gekennzeichnet, daß die in Anschalgrichtung hinter den Hammerfedern (1) angeordnete Spannwelle (2) für die Hammerfedern (1) auf ihrer Umfangsfläche einen schraubenlinienförmig verlaufenden Steg (8) aufweist, und am Wellenanfang und am Wellenende jeweils ein Maximum der Schraubenlinie liegt, sowie aus einem in Schreibzeileinrichtung verlaufenden und verschiebbaren Auslöse- und Halteband (7) für die Hammerfedern (1), das von diesen im gespannten Zustand mit ihren Hammerspitzen hintergriffen wird, und eine Ausnehmung (11) für den Durchtritt der Hammerfedern (1) aufweist.

2. Schnelldrucker nach Anspruch 1, dadurch gekennzeichnet, daß die Länge der Ausnehmung (11) mindestens einer halben Periode der Schraubenlinie des Stegs (8) entspricht.

3. Schnelldrucker nach Anspruch 1 oder 2, dadurch gekennzeichnet, daß die Anzahl der in Reihe nebeneinanderstehenden Hammerfedern (1) der Anzahl der Schreibstellen pro Druckzeile entspricht.

4. Schnelldrucker nach einem oder mehreren der Ansprüch 1 bis 3, dadurch gekennzeichnet, daß der Hammerkörper (12) der Hammerfedern (1) an seiner Spitze (13) kugelförmig ausgebildet ist.

5. Schnelldrucker nach einem oder mehreren der Anspüch 1 bis 4, dadurch gekennzeichnet, daß die Spannwelle (2) derart angeordnet ist, daß im gespannten Zustand der Hammerfedern deren Schenkel am Maximum des schraubenlinienförmigen Steges anliegt und in der entspannten Stellung am Wellengrund (10).

6. Schnelldrucker nach einem oder mehreren der Ansprüche 1 bis 5, dadurch gekennzeichnet, daß der Typenträger aus einem in Schreibzeilenrichtung angeordneten und umlaufenden Typenband (6) mit mindestens einem Typensatz besteht.

7. Schnelldrucker nach Anspruch 6, dadurch gekennzeichnet, daß im Typenband jeder Schreibtype zugeordnete Lochmarken vorhanden sind, die mittels einer Lichtschranke abgezählt werden.

8. Schnelldrucker nach Anspruch 6 oder 7, dadurch gekennzeichnet, daß zu Beginn jedes Typensatzes eine Anfangsmarke (17) angeordnet ist.

9. Schnelldrucker nach einem oder mehreren der Ansprüche 1 bis 8, dadurch gekennzeichnet, daß an der Zeilenanfangsstellung des Halte- und Auslösebandes (7) eine Zeilenanfangsmarke (18) vorgesehen ist, die mittels eines Signalgebers abgetastet wird.

## Claims

1. Rapid printer, especially line printer, consisting of a type carrier (6), an inked ribbon (4), type bar springs (1) and a release mechanism for said springs comprising a rotating tensioning shaft (2) and an electronic control part, characterized by the fact that the in striking direction behind the type bar springs (1) arranged tensioning shaft (2) for the type bar springs (1) has on its circumferential surface a helically running strap (8) and that at the start of the shaft and at the end of the shaft there is each time a maximum of the helical line, and that it consists also of a movable releasing and holding band (7) for the type bar springs (1) which runs in the direction of the printing lines and behind which the tips of the type bar springs (1) reach in their tensioned state and said band (7) has a cut-out (11) through which type bar springs can move.

2. Rapid printer as defined in claim 1, characterized by the fact that the length of the cut-out (11) corresponds to at least half a turn of the helical line of the strap (8).

3. Rapid printer as defined in claim 1 or 2, characterized by the fact that the number of type bar springs (1) standing in a row next to one another corresponds to the number of printing spots per printing line.

4. Rapid printer as defined in one or several of claims 1 to 3, characterized by the fact that the tip (13) of the bar body (12) of the type bar springs (1) is designed spherical.

5. Rapid printer as defined in one or several of claims 1 to 4, characterized by the fact that the tensioning shaft (2) is arranged in such a way that in the tensioned state of the type bar springs their sides bear on the maximum of the helical strap and on the base (10) of the shaft in their release position.

6. Rapid printer as defined in one or several claims 1 to 5, characterized by the fact, that the type carrier consists of a rotating band (6) arranged in the direction of the printing lines and having at least one type set.

7. Rapid printer as defined in claim 6, characterized by the fact that in the type band there are present perforation marks pertaining to each printing character which are counted by means of a light barrier.

8. Rapid printer as defined in claim 6 or 7, characterized by the fact that a start mark (17) is arranged at the start of each type set.

9. Rapid printer as defined in one or several of claims 1 to 8, characterized by the fact that at the line start position of the holding and releasing band (7) there is provided a line start mark (18) which is scanned by means of a signal sender.

## Revendications

1. Imprimante rapide, en particulier une imprimante de lignes, se composant d'un porte-caractères (6), d'un ruban encreur (4), de ressorts de marteau (1) et d'un système de déclinchement pour les ressorts de marteau, qui se compose d'un rouleau de tension rotatif (2) et d'un dispositif de commande électronique, caractérisée en ce que le rouleau de tension (2) des ressorts de marteau (1), disposé derrière ceux-ci en direction de frappe, est équipé d'un traverse disposée en forme hélicoidale (8) sur sa circonférence et en ce que les deux extrémités du roleau sont pourvues d'un maximum d'hélices et qu'elle est équipée d'un bande de déclenchement et d'arrêt (7) des ressorts de marteau (1), qui est translatable et disposée en direction des lignes d'écriture et sous tension des ressorts de marteau (1) la bande de déclenchement et d'arrêt est saisie par derrière avec les extrémités de marteau et est équipée d'un creux (11) pour le passage des ressorts de marteau (1).

2. Imprimante rapide selon revendication 1, caractérisée en ce que la longueur du creux (11) correspond au moins à un demi-cycle de l'hélice de la traverse (8).

3. Imprimante rapide selon les revendications 1 ou 2, caractérisée en ce que le nombre des ressorts de marteau disposés en série parallèle (1) correspond au nombre de positions d'impression par ligne imprimée.

4. Imprimante rapid selon une ou plusieurs des revendications 1 à 3, caractérisée en ce que le corps de marteau (12) des ressorts de marteau (1) a son extrémité (13) en forme de boulle.

5. Imprimante rapide selon une ou plusieurs des revendications 1 à 4, caractérisée en ce que le rouleau de tension (2) est disposé de telle sorte que, en état de tension des ressorts de marteau, le côté de ceux-ci est adjacent au point maximum de la traverse disposée en forme hélicoidale et que, en position de détente, le côté est adjacent au fond du rouleau de tension (10).

6. Imprimante rapide selon une ou plusieurs des revendications 1 à 5, caractérisée en ce que le porte-caractères se compose d'une bande-caractères rotative (6), disposée en direction des lignes d'écriture, avec au moins un jeu de caractères.

7. Imprimante rapide selon revendication 6, caractérisée en ce que la bande-caractères est équipée de marques de perforation afférentes à chaque caractère, et comptées à l'aide d'un barrage photoélectrique.

8. Imprimante rapide selon revendications 6 ou 7, caractérisée en ce que une marque de début (17) est disposée au début de chaque jeu de caractères.

9. Imprimante rapide selon une ou plusieurs des revendications 1 à 8, caractérisée en ce que la position de début de ligne de la bande de déclenchement et d'arrêt (7) est pourvue d'une marque de début de ligne, balayée à l'aide d'un poste transmetteur des signaux.

# FIG. 1

0 008 436

FIG. 2

FIG. 3

FIG. 4